# EUROPÄISCHE PATENTSCHRIFT

(11) **EP 2 110 539 B1**
(45) Veröffentlichungstag und Bekanntmachung des Hinweises auf die Patenterteilung: **14.12.2011**
(21) Anmeldenummer: 09166288.2
(22) Anmeldetag: 26.02.2001
(51) Int. Cl.: F02M 37/22

(54) **Filtereinrichtung für Dieselkraftstoff eines Kraftfahrzeug-Verbrennungsmotors**
Diesel fuel filter device of a vehicle engine
Filtre de gazole d'un moteur à combustion de véhicule

(30) Priorität: 13.05.2000 DE 10023649; 28.02.2000 DE 10009469
(43) Veröffentlichungstag der Anmeldung: 21.10.2009
(62) Teilanmeldung aus: 01104709.9
(73) Patentinhaber: MAHLE Filtersysteme GmbH, 70376 Stuttgart (DE)
(72) Erfinder: Hönemann, Erik, 81541 München (DE); Schick, Albert, 74336 Brackenheim (DE); Stange, Jörg, 70567 Stuttgart (DE); Lang, Wolfgang, 73262 Reichenbach (DE); Ruppel, Stefan, 69126 Heidelberg Emmertsgrund (DE)
(74) Vertreter: BRP Renaud & Partner

(56) Entgegenhaltungen:
- EP-A- 0 631 044
- DE-A1- 4 430 471
- DE-A1- 19 601 760
- FR-A1- 2 594 708

## Beschreibung

Die Erfindung betrifft eine Filtereinrichtung für Dieselkraftstoff eines Kraftfahrzeug-Verbrennungsmotors nach dem Oberbegriff der Patentansprüche 1.

Die Erfindung beschäftigt mit dem Problem, ein Kraftstofffilter gleicher Konstruktion mit einer Heizeinrichtung einsetzen zu können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Bezüglich einer temperaturunabhängigen Filter-Wartungsanzeige sollen nur solche Druckerhöhungen innerhalb des Kraftstoffes als Hinweis auf eine unzulässige Verschmutzung des Filters angesehen werden, die oberhalb eines unteren Temperaturbereiches des Kraftstoffes, in dem temperaturbedingt Feststoff-Ausscheidungen anfallen können, auftreten. Denn nur dann kann Sicherheit darüber bestehen, dass die Druckerhöhung innerhalb des Krafstoffes auf einer echten, dauerhaften Filterverschmutzung und nicht auf einer lediglich bei niedrigen Temperaturen ausfallenden, sich bei normaler Motorbetriebstemperatur wieder auflösenden Feststoffteilchen beruht.

Mit Bezug auf eine vorhandene Heizvorrichtung soll Heizenergie nur dann eingesetzt werden, wenn bedingt durch niedrige Kraftstofftemperaturen tatsächlich in dem Filter ein für einen einwandfreien Motorbetrieb zu hoher Strömungswiderstand auftritt. Ein solch zulässig hoher Strömungswiderstand ist nicht allein von der Temperatur des Kraftstoffes abhängig, sondern auch von dessen Konsistenz sowie dem Betriebszustand des Filters. So wird beispielsweise bei einem Filter, das sich bereits im oberen Bereich eines zulässigen Verschmutzungszustandes befindet, in der Regel bereits bei höheren Kraftstofftemperaturen ein unzulässig hoher Strömungsverlust auftreten können als bei einem Filter im Neuzustand. Weiterhin wird von Bedeutung sein, welche paraffinausfallhemmenden Zusatzstoffe einem Dieselkraftstoff zugegeben sind, das heißt die Zusammensetzung des Dieselkraftstoffes wird ebenfalls einen temperaturunabhängigen Einfluss auf die bei niedrigen Temperaturen auftretenden Strömungswiderstände in dem Filter ausüben. Damit ist es wichtig, dass Heizenergie nicht ausschließlich in Abhängigkeit des Temperaturzustandes des Dieselkraftstoffes eingesetzt wird, sondern tatsächlich in Abhängigkeit des sich in einem vorgegebenen niedrigen Temperaturbereich jeweils aktuell einstellenden Strömungswiderstandes innerhalb des Filters.

Ein besonderer Vorteil des vorher beschriebenen Verfahrens besteht darin, die für die Anzeige eines Filterverschmutzungs-Wartungssignals bei einem für einen einwandfreien Motorbetrieb unzulässig hoch verschmutzten Filter notwendigen Einrichtungen, Messungen und Auswertungen zusätzlich auch noch für die Aktivierung der Heizleistung nutzen zu können. Dieser Vorteil ergibt sich ganz einfach daraus, dass erst bei einem oberhalb eines vorgegebenen niedrigen Temperaturbereiches, in dem bei einem Dieselkraftstoff insbesondere Paraffinausscheidungen erfolgen können, ein unzulässig hoher Strömungswiderstand innerhalb des Filters ausschließlich auf einer Verschmutzung des Filters beruhen kann.

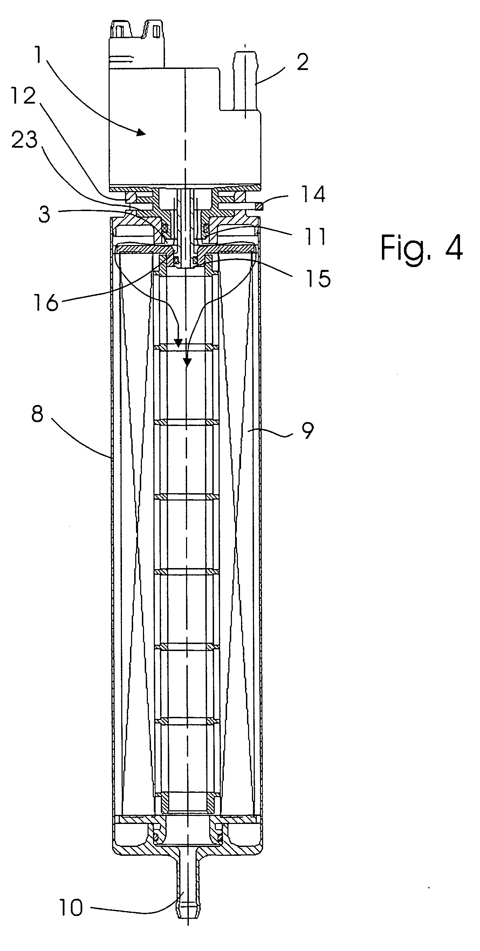

Ausführungsbeispiele der Erfindung sind in der Zeichnung, insbesondere in Fig. 4 dargestellt.

In dieser zeigen
- Fig. 1: ein Schaltbild für ein Verfahren,
- Fig. 2: ein Schaltbild für ein Verfahren bei Anwendung ei- ner aus einem Haupt- und einem parallel geschalte- ten Zusatzfilter bestehenden Filtereinrichtung,
- Fig. 3: einen Längsschnitt durch eine Filtereinrichtung mit einem Haupt- und einem Zusatzfilter,
- Fig. 4: eine Kombination aus einem im Längsschnitt darge- stellten, erfindungsgemäßen Kraftstofffilter und einem über eine Steckverbindung angebundenen - nicht geschnittenen - Heizmodul.

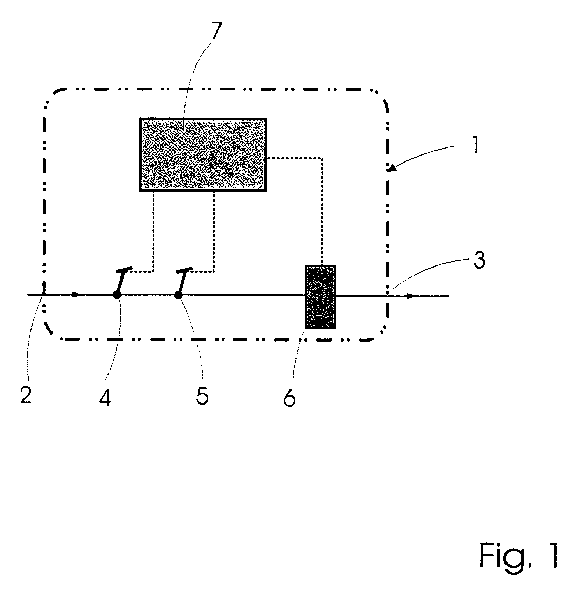

Bei dem Schaltbild nach Fig. 1 ist der Umriss einer für die Erwärmung eines Dieselkraftstoffes vorgesehenen Einrichtung 1 strichpunktiert dargestellt. An dieser Umrisslinie ist die Lage eines in diese Einrichtung Dieselkraftstoff einleitenden Stutzens 2 sowie eines in ein nachgeschaltetes - in dieser Figur nicht dargestelltes - Kraftstofffilter führenden Zulaufstutzens 3 angedeutet. Innerhalb des Steuerschaltbildes nach Fig. 1 sind weiterhin bezeichnet mit 4 ein die Temperatur des Kraftstoffes erfassender Temperaturfühler, mit 5 ein den Druck des Kraftstoffes erfassender Drucksensor, eine elektrische Heizvorrichtung 6 zur Erwärmung des Kraftstoffes sowie eine mit den Elementen 4 bis 6 jeweils elektrisch verbundene Elektronikeinrichtung 7.

Unter Einsatz der vorgenannten Steuer- und Auswerteelemente kann eine Heizung zur Aufwärmung des Diesel-Kraftstoffes in einer Filtereinrichtung wie folgt gesteuert werden.

Bei einem oberhalb eines vorgegebenen Grenzwertes liegenden Druckwert (erfasst durch den Drucksensor 5) wird bei einer unterhalb eines vorgegebenen Grenzwertes liegenden Temperatur (erfasst durch den Temperaturfühler 4) mittels der Elektronikeinrichtung 7 die elektrische Heizvorrichtung 6 eingeschaltet. Ein Ausschalten der elektrischen Heizvorrichtung 6 erfolgt, sobald die an dem Temperaturfühler 4 ermittelte Temperatur den vorgegebenen Grenzwert unterschreitet und zwar grundsätzlich unabhängig von der Höhe des an dem Drucksensor 5 anliegenden Druckes.

Bei einem innerhalb des Kraftstoffes unterhalb eines vorgegebenen Temperatur-Grenzwertes an dem Drucksensor 5 oberhalb des für diesen vorgegebenen Druck-Grenzwertes liegenden Druck wird davon ausgegangen, dass durch niedrige Temperaturen bedingte Kraftstoffausscheidungen vorliegen und dadurch eine temporäre Filterverstopfung bedingt ist. Von einer solchen Verstopfung wird dagegen bei einer Kraftstofftemperatur, die oberhalb des für den Temperaturfühler 4 vorgegebenen Temperatur-Grenzwertes liegt, nicht ausgegangen. Bei einer Überschreitung des vorgegebenen Druckgrenzwertes an dem Drucksensor 5 bei einer oberhalb der für den Temperaturfühler 4 vorgegebenen Grenztemperatur liegenden Kraftstofftemperatur wird vielmehr angenommen, dass der erhöhte Druck auf einer bleibenden Verschmutzung des Filters beruht, die beispielsweise auf einer nicht rechtzeitigen Vornahme eines vorgeschriebenen Filterwechsels beruhen kann. In einem solchen Fall, das heißt bei Überschreiten des vorgegebenen Druckgrenzwertes an dem Drucksensor 5 bei oberhalb des vorgegebenen Temperatur-Grenzwertes liegender Temperatur an dem Temperaturfühler 4 wird daher durch die Elektronikeinrichtung 7 ein Wartungssignal erzeugt.

Der Temperaturfühler 4 muss mit Bezug auf die Strömungsrichtung des Kraftstoffes stromauf der elektrischen Heizvorrichtung 6 liegen. Der Drucksensor 5 kann dagegen stromauf oder stromab der elektrischen Heizeinrichtung 6 angeordnet sein.

Eine Filtereinrichtung mit einer Heizvorrichtung, bei der die Heizvorrichtung nach dem in Fig. 1 dargestellten Schaltbild betrieben wird, ist in Fig. 4 dargestellt. Deren Aufbau und Funktion ist wie folgt.

In einem rohrförmigen Filtergehäuse 8 ist ein Filter in der Form eines Ringfilterelementes 9 gelagert. Das Filtergehäuse 8 weist an seinen Stirnseiten jeweils einen Zulaufstutzen 3 sowie einen Ablaufstutzen 10 auf. Durchströmt wird das Ringfilterelement 9 von radial außen nach radial innen. Die Durchströmung ist mit Strömungspfeilen angedeutet.

Über den Zulaufstutzen 3 ist das Filtergehäuse 8 mit einer Heizmodul-Einrichtung 1 für den in dem Filter zu filternden Dieselkraftstoff verbunden, in die der hierzu zu behandelnde Kraftstoff durch einen Zulaufstutzen 2 eingeführt wird.

Die Verbindung ist eine Steckverbindung, bei der ein von der Heizmodul-Einrichtung 1 abragender Stutzen 11 radial gedichtet in den Stutzen 3 eingeschoben ist.

Die Steckverbindung ist über eine Lösesicherung gegen ein Lösen gesichert. Ausgebildet ist diese Lösesicherung in der Art, dass Ringrippen 12, 13 von der betreffenden Stirnseite des Filtergehäuses 8 bzw. von der Heizmodul-Einrichtung 1 radial ineinandergreifen und mittels eines radial eingeschobenen U-förmigen Federbügels 14 gegeneinander fixiert sind. Bei dieser Lösesicherung handelt es sich um eine Schnellverschlusssicherung, da der Federbügel 14 einfach auf- und abziehbar ist. Prinzipiell kann auch jede andere Art einer Schnellverschlusssicherung für die Steckverbindung eingesetzt werden.

Um in einer in der Heizmodul-Einrichtung 1 vorgesehenen Druckmessvorrichtung (zeichnerisch in dieser Figur nicht dargestellt) den Differenzdruck in dem Filtergehäuse 8 zwischen der Roh- und Reinseite des Ringfilterelementes 9 bestimmen zu können, ragt von der Heizeinrichtung 6 ausgehend ein Zentralstutzen 15 durch die Schnellverschlussmittel hindurch in den Reinraum des Ringfilterelementes 9. Um in den Reinraum des Ringfilterelementes 9 eindringen zu können, ist in der betreffenden Stirnseite des Ringfilterelementes 9 eine zentrale Öffnung 16 vorgesehen, in die der Zentralstutzen 15 radial dicht eingreift. Die Funktion der Heizeinrichtung einschließlich der Wartungssignalanzeige für das Filter erfolgen nach dem in Fig. 1 dargestellten Steuerverfahren.

Bei der vorstehend beschriebenen, mit einer Heizvorrichtung ausgerüsteten Filtereinrichtung wird auf folgenden Stand der Technik verwiesen.

Kraftstofffiltergehäuse mit einer integrierten Heizeinrichtung zeigen beispielsweise DE 44 30 471 A1, DE 37 24 410 A1, FR 2 594 708 A1 und DE 196 01 760 A1.

Ein mit einem Kraftstofffilter zusammenwirkendes Druckregelventil zeigt DE 196 01 760 A1. Bei jenem Kraftstofffilter handelt es sich um ein langgestrecktes, sogenanntes Leitungsfilter mit einem Zulauf an einer Stirnseite und einem Ablauf an der entgegengesetzten Stirnseite. Das Druckregelventil ist in eine der stirnseitigen Öffnungen des Filtergehäuses über eine Steckverbindung eingesteckt. Durch diese Bauart kann das dortige Kraftstofffilter in einer gleichen Ausführung wahlweise mit oder ohne ein in dieses eingestecktes Druckregelventil verwendet werden. Durch die Verwendung einer direkten Steckverbindung zwischen dem Druckregelventil und dem Filtergehäuse wird eine zusätzliche Verbindungsleitung zwischen Filtergehäuse und Druckregelventil eingespart.

Die Einrichtung nach Fig. 4 beschäftigt sie sich mit dem Problem, ein Kraftstofffilter gleicher Konstruktion wahlweise mit und ohne eine Heizeinrichtung nach dem Steuerverfahren einsetzen zu können und für den Fall des Einsatzes einer Heizeinrichtung diese möglichst einfach mit dem Kraftstofffilter verbinden zu können.

Bei der erfindungsgemäßen Ausgestaltung wird von der bei Druckregelventilen an sich bereits bekannten Art einer Verbindung mit einem Kraftstofffilter Gebrauch gemacht. Mit Bezug auf die vielfach bekannten anderen bisher praktizierten Lösungen bei Heizeinrichtungen bedurfte es von einem Fachmann nicht zu erwartender Überlegungen, um von der bisherigen Praxis abweichend ein bei der Anbringung von Druckregelventilen an Kraftstofffiltern bereits bekanntes Lösungsprinzip auf Filter mit Heizeinrichtungen zu übertragen.

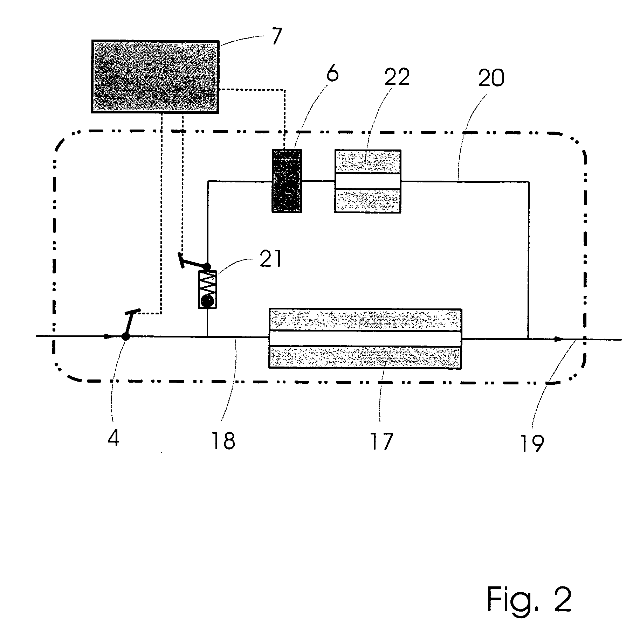

Fig. 2 zeigt eine Prinzipdarstellung einer Filtereinrichtung, bei der das Steuerverfahren zum Betreiben der Heizung und Anzeigen eines Filterverschmutzungs-Warnsignales bei einer Filtereinrichtung eingesetzt ist, die mit einem Haupt- und einem parallel geschalteten Zusatzfilter als Notfilter arbeitet.

Im Einzelnen ist die Einrichtung nach Fig. 2 wie folgt aufgebaut.

Ein Hauptfilter 17 wird von einem einem Kraftfahrzeug-Verbrennungsmotor zuzuführenden Dieselkraftstoff durchströmt. Dabei wird der Kraftstoff dem Hauptfilter 17 durch eine Zuleitung 18 zugeführt und aus diesem durch eine Leitung 19 abgeführt.

Von der Zuleitung 18 zweigt eine das Hauptfilter 17 umgehende Umgehungsleitung 20 ab, die stromab des Hauptfilters 17 in die aus dem Hauptfilter 17 abführende Leitung 19 einmündet. Im Abzweigungsbereich der Zuleitung 18 ist in der Umgehungsleitung 20 ein Überdruckventil 21 eingebaut. Stromab des Überdruckventiles 21 sind in der Umgehungsleitung 20 in Strömungsrichtung hintereinander eine Heizvorrichtung 6 und ein Zusatzfilter 22 vorgesehen.

Stromauf der Abzweigung der Umgehungsleitung 20 aus der Zuleitung 18 befindet sich ein Temperaturfühler 4 zur Erfassung der Kraftstofftemperatur.

Der Temperaturfühler 4, das Überdruckventil 21 sowie die Heizvorrichtung 6 sind über elektrische Leitungen mit einer zentralen Elektronikeinrichtung 7 als Steuereinrichtung verbunden, die gewöhnlich als ECU (Engine Controll Unit) bezeichnet wird. In der Elektronikeinrichtung 7 kann die Heizvorrichtung 6, bei der es sich üblicherweise um eine elektrische Heizung handelt, in Abhängigkeit der von dem Temperaturfühler 4 gemeldeten Kraftstofftemperatur sowie der Stellung des Überdruckventiles 21 gesteuert, das heißt ein- oder ausgeschaltet, werden.

Das Filtervolumen, insbesondere die Filterfläche des Zusatzfilters 22 ist im Vergleich zu dem Filtervolumen bzw. der Filterfläche des Hauptfilters 17 erheblich geringer. Auch besitzt das Filtermaterial des Zusatzfilters 22 einen gegenüber dem Hauptfilter 17 geringeren Abscheidegrad, der gerade noch ausreichend ist, um die Funktionsfähigkeit der Einspritzanlage des Verbrennungsmotors durch Kraftstoffverschmutzungen gerade noch nicht zu gefährden.

Die vorstehend beschriebene Einrichtung funktioniert wie folgt.

Besitzt der Dieselkraftstoff eine von dem Temperaturfühler 4 ermittelte Temperatur, die unterhalb eines vorgegebenen unteren Grenzwertes liegt, bei der temperaturbedingt Feststoffteilchen aus dem Kraftstoff in dem Hauptfilter 17 verstopfungsgefährdet ausfallen können und hat sich insoweit temperaturbedingt bereits stromauf des Hauptfilters ein Druck eingestellt, der zum Öffnen des Überdruckventils 21 geführt hat, so schaltet die Elektronikeinrichtung 7 aufgrund der von dem Temperaturfühler 4 und dem Überdruckventil 21 erhaltenen Signale die Heizvorrichtung 7 zur Vorwärmung des die Umgehungsleitung 20 durchströmenden Kraftstoffes ein. Aufgrund des geringen Filtervolumens sowie gegebenenfalls des gegenüber dem Hauptfilter 17 geringeren Abscheidegrades in dem Zusatzfilter 22 ist das Zusatzfilter 22 nach Einschalten der Heizvorrichtung 7 relativ rasch in einem für eine befriedigende Motorfunktion ausreichenden Maße durchströmbar. Bei fortdauerndem Motorbetrieb erwärmt sich auch das Hauptfilter 17, wodurch dessen Durchflusswiderstand sinkt und zwar soweit, dass nach kurzer Zeit die an dem Überdruckventil 21 anstehenden Druckverhältnisse ein Schließen des Ventils 21 bewirken. Gleichzeitig wird die elektrische Heizeinrichtung 7 abgeschaltet.

Entsteht bei an dem Temperaturfühler 4 herrschenden Temperaturen oberhalb des vorgegebenen Grenzwertes vor dem Hauptfilter 17 in den Kraftstoff ein das Überströmventil 21 öffnender Überdruck, so wird von einer laufzeitbedingten Verschmutzung des Hauptfilters 17 ausgegangen und ausgelöst durch die Elektronikeinrichtung 7 ein Wartungssignal erzeugt.

Der Vorteil der Ausführung besteht darin, dass Kraftstoff bei niedrigen Temperaturen erst und nur dann vorgewärmt wird, wenn ein sich in dem Hauptfilter 17 einstellender, zu hoher Druckverlust dies für einen einwandfreien Motorbetrieb erforderlich macht. Ferner kann mit einer relativ geringen Heizleistung bei einem bei niedrigen Temperaturen erfolgenden Motorstart die für einen einwandfreien Motorbetrieb erforderliche Mindestkraftstoffversorgung äußerst rasch erzielt werden. Dies ergibt sich daraus, dass bei dem Zusatzfilter 22 nur ein kleines Filtervolumen erwärmt werden muss und dass das Filtermaterial dieses Zusatzfilters 22 zusätzlich noch einen gegenüber dem Hauptfilter 17 kleineren Abscheidegrad besitzen kann, wodurch die Gefahr eines Zusetzens des Hauptfilters 17 durch Ablagerungen bereits grundsätzlich vermindert ist.

Bei niedrigen Kraftstofftemperaturen, d.h. solchen die unterhalb des an dem Temperaturfühler 4 vorgegebenen unteren Grenzwertes liegen, ist das Hauptfilter 17 in der Regel nicht vollständig verstopft, sondern der Durchflusswiderstand ist lediglich in einem für einen einwandfreiem Motorbetrieb unzulässig hohen Maße vergrößert. Dies bedeutet, daß auch bei geöffnetem Überdruckventil 21 Kraftstoff durch das Hauptfilter in geringem Maße hindurchströmt. Dadurch senkt sich der Durchflusswiderstand in dem Hauptfilter 17 bei laufendem Motorbetrieb allmählich auf den üblichen Betriebswert ab, bei dem das Überdruckventil 21 geschlossen ist. Dies ergibt sich daraus, dass den Einspritzventilen des Verbrennungsmotors jeweils Kraftstoff im Überschuss zugeführt wird, wobei der Überschuss sodann im Kreislauf gefördert wird. Dadurch gelangt bei laufendem Motorbetrieb bereits durch den Motor erwärmter Kraftstoff an das Hauptfilter 17. Zudem können Haupt- und Zusatzfilter 17 bzw. 22 auch räumlich in einem gemeinsamen Gehäuse derart untergebracht sein, daß die elektrische Heizvorrichtung 6 zwar in überwiegendem Maße den in das Zusatzfilter 22 eintretenden Kraftstoff erwärmt, aber zusätzlich auch über Wärmeleitung innerhalb des Filtergehäuses erwärmend auf den an und in dem Hauptfilter 17 anstehenden Kraftstoff einwirkt.

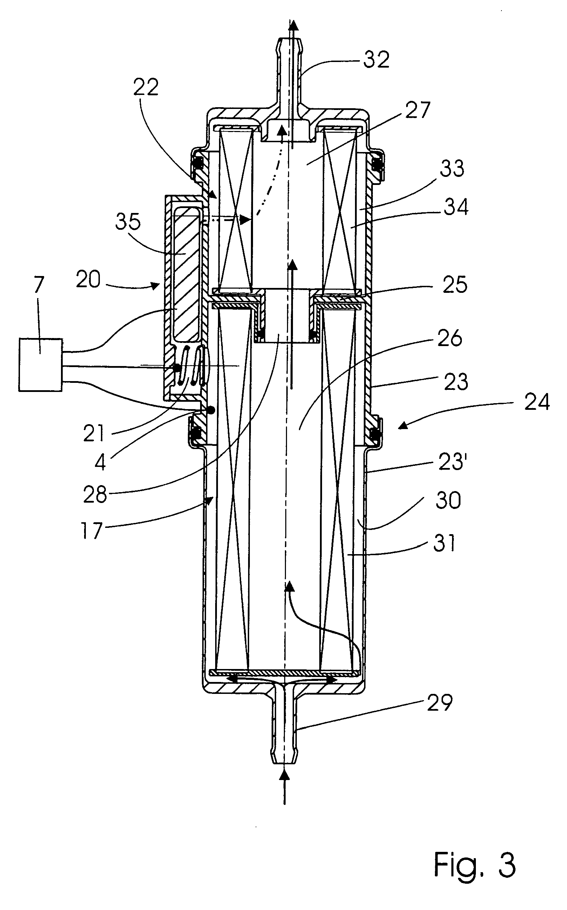

Fig. 3 zeigt ein konkretes Ausführungsbeispiel zu der in Fig. 2 schematisch dargestellten Einrichtung. Bei dieser Ausführung sind das Haupt- und Zusatzfilter 17 bzw. 22 in einem gemeinsamen aus Einzelteilen 23 und 23' Filtergehäuse 24 untergebracht. Zwischen den beiden Filtern 17, 22 befindet sich eine Trennwand 25. Über diese Trennwand 25 sind die Reinräume 26 bzw. 27 über eine Öffnung 28 miteinander verbunden.

Der Kraftstoff tritt durch eine Zuführleitung 29 in das Filtergehäuse 24 ein, und zwar in den Rohraum 30 des Hauptfilters 17. Entsprechend den eingetragen Strömungspfeilen strömt der Kraftstoff von dort durch den Ringfiltereinsatz 31 des Hauptfilters 17 in den Reinraum 26 es Filters. Von dort gelangt der Kraftstoff über die Öffnung 28 in der Trennwand 25 in den Reinraum 27 des Zusatzfilters 22, von wo aus er das Filtergehäuse 24 über eine Abführleitung 32 verlässt.

In einem als Umgehungsleitung 20 fungierenden Verbindungsraum zwischen den Rohräumen 30 und 33 der Filter 17 und 22 ist ein Überdruckventil 21 angebracht, dessen Funktion derjenigen entspricht, die bei dem Funktionsprinzip nach Fig. 2 beschrieben ist. Bei geöffnetem Überdruckventil 21 strömt Kraftstoff aus dem Rohrraum 30 des Hauptfilters 17 in den Rohrraum 33 des Zusatzfilters 22 (angedeutet durch einen strichpunktierten Pfeil) und von dort durch den Ringfiltereinsatz 34 des Zusatzfilters 22 hindurch über dessen Reinraum 27 durch die Abführleitung 32 aus dem Filtergehäuse heraus. Der Heizvorrichtung 6 aus der Prinzipdarstellung entspricht in dem konkreten Ausführungsbeispiel ein PTC (Positive Temperature Coefficient)-Heizelement 35.

Der Temperaturfühler 4 ist in dem Rohraum 30 des Hauptfilters 17 stromauf des Überdruckventils 21 angebracht. Wie in der Prinzipdarstellung nach Fig. 2 sind der Temperaturfühler 4, das Überdruckventil 21 sowie das Heizelement 35 mit einer Elektronikeinrichtung 7 verbunden, in die eingeleitet werden die Kraftstofftemperatur, die Stellung des Überdruckventils 21 und von der aus in Abhängigkeit dieser vorgenannten Werte das elektrische Heizelement 35 ein- oder ausgeschaltet wird.

Wird bei einer an den Temperaturfühler 4 gemessenen Kraftstofftemperatur, die unterhalb des vorgegebenen Temperatur-grenzwertes liegt, in der Elektronikeinrichtung 7 ein geöffnetes Überdruckventil 21 festgestellt, so wird die Heizvorrichtung 6 in der Form des PTC-Heizelementes 35 eingeschaltet. Dieses Heizelement 35 wird bei Schließen des Überdruckventils 21 sodann wieder abgeschaltet.

Bei dem vorbeschriebenen Ausführungsbeispiel handelt es sich um ein in einem gemeinsamen Gehäuse 24 ausgebildetes Doppelfilter mit einem Haupt- und einem Zusatzfilter 17 bzw. 22, wobei je nach Temperatur lediglich das Hauptfilter 17 alleine oder gemeinsam mit dem Zusatzfilter 7 aktiv ist bzw. sind.

## Patentansprüche

1. Filtereinrichtung mit einer Heizmodul-Einrichtung (1) und mit
- einem lang gestreckten, zylindrischen Filtergehäuse,
- einem in diesem Filtergehäuse angeordneten, ringförmigen, radial durchströmten Ringfilterelement,
- einer Zu- und einer Ablauföffnung an den gegenüberliegenden Stirnseiten des Filtergehäuses,
**dadurch gekennzeichnet, dass**
- die Heizmodul-Einrichtung (1) über eine an der Zulaufstirnseite des Ringfilterelementes (9) lösbar vorgesehene, von dem gesamten zuzuführenden Kraftstoff durchströmte Steckverbindung (3, 11) mit dem Filtergehäuse (8) verbunden ist,
- die Steckverbindung durch Schnellverschlussmittel (12, 13; 14) gegen Lösen gesichert ist,

2. Filtereinrichtung nach Anspruch 1,
**dadurch gekennzeichnet,**
**dass** die Schnellverschlussmittel (12, 13; 14) einen in radial ineinander greifende Schlitze der Anschlussbereiche des Filtergehäuses (8) und der Heizvorrichtung (6) eingreifenden, U-förmigen Federbügel (14) umfassen.

3. Filtereinrichtung nach Anspruch 1 oder 2,
**dadurch gekennzeichnet, dass**
- die Heizmodul-Einrichtung (1) einen, die Kraftstoff führende Steckverbindung (3, 11) zentral durchgreifenden Zentralstutzen (15) besitzt,
- die dem Stutzen (3) zugeordnete Stirnseite des Ringfilterelementes (9) eine den Zentralstutzen (15) aufnehmende Öffnung (16) besitzt,
- der Zentralstutzen (15) über einen dichten Schiebesitz in die Stirnseite des Ringfilterelementes (9) einschiebbar ist.

## Claims

1. A filter device having a heating module device with
- an elongated, cylindrical filter housing
- an annular ring filter element that is arranged in this filter housing and is flowed through radially,
- both a supply and a discharge opening on the opposite front faces of the filter housing,
**characterised in that**
- the heating module device (1) is connected to the filter housing (8) by a plug connector (3, 11) that is detachably provided on the supply front face of the ring filter element (9) and is flowed through by all of the fuel to be supplied,
- the plug connection is ensured against becoming detached by quick-connect coupling means (12, 13; 14).

2. The filter device as specified in claim 1,
**characterised in that**
the quick-connect coupling means (12, 13; 14) comprise slits, which radially engage with one another, of the connection regions of the filter housing (8) as well as the U-shaped spring clamps (14) engaging the heating device (6).

3. The filter device as specified in claim 1 or 2
**characterised by** the features that
- the heating module device (1) has a central fitting (15) that centrally engages the fuel-conducting plug connection (3, 11),
- the front face of the ring filter element (9) associated with the fitting (3) has an opening (16) receiving the central fitting (15),
- the central fitting (15) can be inserted into the front face of the ring filter element (9) by means of a sealed sliding seat.

## Revendications

1. Dispositif de filtrage comportant un dispositif de module chauffant avec
- un logement de filtre cylindrique, allongé,
- un élément de filtre annulaire, traversé radialement, disposé dans ce logement de filtre,
- une ouverture d'amenée et d'évacuation sur les côtés frontaux opposés du logement de filtre,
**caractérisé en ce que**
- le dispositif de module chauffant (1) est relié au logement de filtre (8) par l'intermédiaire d'une liaison par enfichage (3, 11) prévue de manière amovible sur le côté frontal d'amenée de l'élément de filtre annulaire (9), traversé par la totalité du carburant à introduire,
- la liaison par enfichage est protégée contre un desserrage par un moyen de fermeture rapide (12, 13 ; 14).

2. Dispositif de filtrage selon la revendication 1,
**caractérisé en ce que**
le moyen de fermeture rapide (12, 13 ; 14) comprend une fente s'engageant radialement à l'intérieur des zones de raccordement du logement de filtre (8) et un étrier de ressort (14) en forme de U, venant en prise avec le dispositif de chauffage (6).

3. Dispositif de filtrage selon la revendication 1 ou 2,
**caractérisé par** les caractéristiques
- le dispositif de module chauffant (1) possède un embout central (15) s'engageant au centre à travers la liaison par enfichage (3, 11) introduisant le carburant,
- le côté frontal de l'élément de filtre annulaire (9) coordonné à l'embout (3) possède une ouvert (16) renfermant l'embout central (15),
- l'embout central (15) peut être coulissé à l'intérieur du côté frontal de l'élément de filtre annulaire (9) par l'intermédiaire d'une assise coulissante étanche.
